(19) Europäisches Patentamt / European Patent Office / Office européen des brevets

(11) **EP 1 898 248 A1**

(12) **EUROPEAN PATENT APPLICATION**

(43) Date of publication:
**12.03.2008 Bulletin 2008/11**

(51) Int Cl.:
***G02B 26/12*** *(2006.01)*

(21) Application number: **07111077.9**

(22) Date of filing: **26.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **11.09.2006 KR 20060087674**
**27.10.2006 KR 20060104983**

(71) Applicant: **SAMSUNG ELECTRONICS CO., LTD.**
**Suwon-si,**
**Gyeonggi-do (KR)**

(72) Inventor: **Ku, Jong-wuk**
**Maetan 3-dong, Yeongtong-gu**
**Suwon-si, Gyeonggi-do (KR)**

(74) Representative: **Waddington, Richard**
**Appleyard Lees,**
**15 Clare Road**
**Halifax HX1 2HY (GB)**

(54) **Laser scanning unit and image forming apparatus having the same**

(57) A laser scanning unit includes a light source (110), a rotary polygon mirror (120) to deflect a laser beam emitted from the light source (110), an f-theta lens (130) to image the laser beam deflected from the rotary polygon mirror (120) on a photoconductor (150), and a flat plate (200) disposed between the light source (110) and the photoconductor (150) to correct a scanning line of the light source (110). The laser scanning unit can correct an inclination and/or a curvature of a scanning line caused by rotations of the rotary polygon mirror (120) and the photoconductor (150) and other working and assembling processes in order to minimize a deterioration in other performances, thereby allowing product quality to improve.

## FIG. 3

EP 1 898 248 A1

**Description**

The present invention relates to an image forming apparatus, and more particularly, to a laser scanning unit to correct an inclination and/or a curvature of a scanning line, and an image forming apparatus having the same.

A conventional electrophotography image forming apparatus is provided with a laser scanning unit to form an electrostatic latent image on a photoconductor.

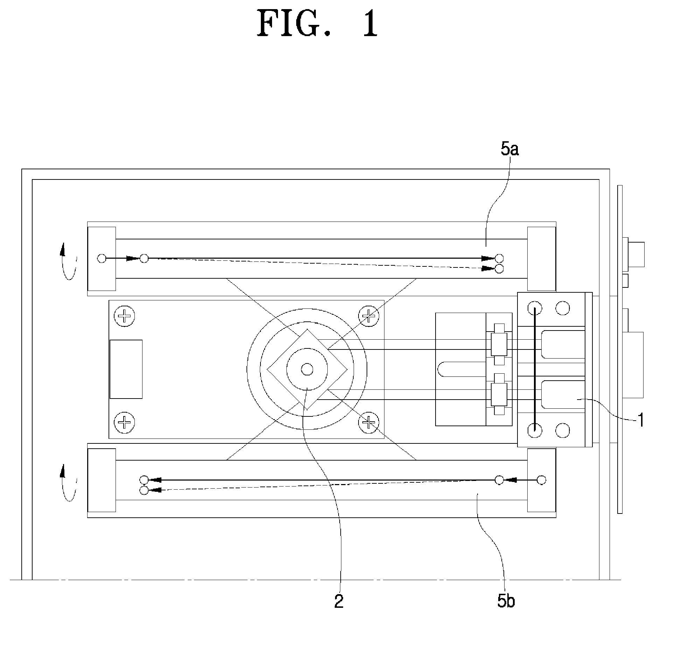

FIG. 1 is a view schematically illustrating a conventional laser scanning unit which forms an electrostatic latent image on a plurality of photoconductors by using a single rotary polygon mirror.

As illustrated in FIG. 1, the laser scanning unit includes a plurality of light sources 1 and a rotary polygon mirror 2, so that it forms an electrostatic latent image on two different photoconductors 5a and 5b. However, as illustrated with a plurality of dotted lines in FIG. 1, scanning lines of laser beams which are imaged on the photoconductors 5a and 5b are gradually inclined with respect to ends of the photoconductors 5a and 5b, respectively. Accordingly, the laser scanning unit requires a means to correct the inclined image in order to produce a normal image.

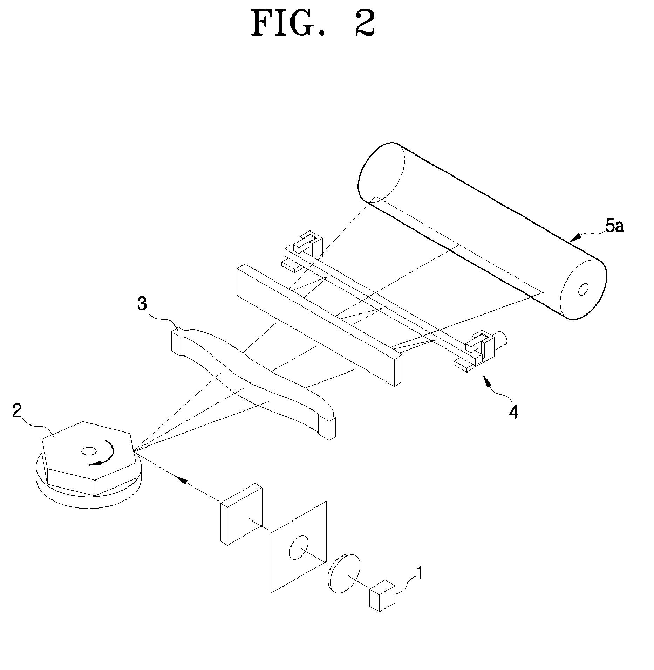

FIG. 2 is a view schematically illustrating another conventional laser scanning unit having means to correct an inclination of a scanning line. As illustrated in FIG. 2, a scanning line-inclination correcting mirror 4 is disposed between an f-theta lens 3 and a photoconductor 5a to allow the scanning line-inclination correcting mirror 4 to move forward and backward with respect to a scanning direction to correct the inclination of the scanning line. Accordingly, when a plurality of light sources 1 are provided in the laser scanning unit of FIG 2., the laser scanning unit of FIG. 2 includes a pair of laser scanning units having the same construction as that of the laser scanning unit of FIG. 1.

However, when the inclination of the scanning line is corrected by moving the mirror 4 forward and backward as described above, a laser beam may be displaced twice as much as the movement of the mirror 4. Accordingly, it is not easy to correct the inclination of the scanning line by a method such as an adjustment of a position or a reflective angle of the mirror. Accordingly, the adjustment of a position or a reflective angle of the mirror could result in a variable diameter of the laser beam, a linearity of the laser beam passing through the f-theta lens 3, etc., thereby causing image quality to deteriorate.

In contrast, Japanese patent publication Nos, 2005-265904 and 2004-070108 disclose tandem type scanning optical systems using a sub-scanning inclined-incident method, which to separate a laser beam by using a reflective mirror on an optical path of the laser beam reflected from a rotary polygon mirror while reducing the rotary polygon mirror in thickness, the laser beam incident onto and reflective from the rotary polygon mirror is to have a predetermined angle. In the tandem type scanning optical systems, a curvature of a scanning line is generated to be symmetrical to an up-and-down direction based on an optical path of a sub-scanning direction, regardless of the number or arrangement of imaging optical systems. Such a curvature of the scanning line is usually corrected by forming lenses of an imaging optical system in a non-symmetrical shape or an aspheric shape, eccentrically disposing or rotating some lenses of the imaging optical system, or deforming a reflective mirror disposed at the rear of the imaging optical system.

An optical path design for laser beams can make the curvature of the scanning line become zero, but the curvature of scanning line results from part tolerances or assembling errors in product fabrication. Accordingly, the curvature of the scanning line is corrected through additional apparatuses or methods as described above.

However, based on an optical path of a laser beam having a largest curvature of a scanning line, curvatures of other scanning lines at optical paths of a plurality of other laser beams are corrected. Accordingly, it is not easy to correct the curvature of the scanning line, which is formed from the plurality of other laser beams which project in various directions.

The present invention provides a laser scanning unit having an improved construction to correct an inclination of a scanning line without a deterioration in other performances, such as a diameter of a laser beam imaged on a photoconductor, a linearity of laser beam, etc., and an image forming apparatus having the same.

The present invention also provides a laser scanning unit having an improved construction to correct a curvature of a scanning line caused by a plurality of laser beams diagonally incident onto a rotary polygon mirror, and an image forming apparatus having the same.

Additional aspects and utilities of the present general inventive concept will be set forth in part in the description which follows and, in part, will be obvious from the description, or may be learned by practice of the general inventive concept.

According to the present invention there is provided an apparatus and method as set forth in the appended claims. Preferred features of the invention will be apparent from the dependent claims, and the description which follows.

According to an aspect of the present invention there is provided a laser scanning unit to correct an inclination of a scanning line, including a light source, a rotary polygon mirror to deflect a laser beam emitted from the light source, an f-theta lens to image the laser beam deflected from the rotary polygon mirror on a photoconductor, and a flat plate inclined at a predetermined angle $\theta$ to a main scanning direction between the f-theta lens and the photoconductor to correct the inclination of the scanning line.

The flat plate may be inclined at a predetermined angle $90°-\theta_{\perp}$ with reference to a scanning surface and may be formed of a transparent material having a predetermined thickness t and a predetermined refractive index n.

The predetermined angle θ of the flat plate may satisfy the following mathematic formula when a time required scanning a line on the photoconductor is represented as s.

$$0 < \left| n \cdot t \cdot \sin\theta_\perp \cdot \cos\theta_\perp \cdot \left( \frac{1}{\sin(\theta_1 + \theta) \cdot \sqrt{n^2 - \sin^2\theta_\perp}} \right) - \left( \frac{1}{\sin(\theta_2 - \theta) \cdot \sqrt{n^2 - \sin^2\theta_\perp}} \right) \right| < 3 \times Linear\ velocity\ of\ photoconductor \times s$$

According to another aspect of the present invention there is provided a laser scanning unit, including at least two light sources, a rotary polygon mirror to deflect laser beams emitted from the light sources toward at least two photoconductors, respectively, at least two f-theta lenses disposed between the light sources and the photoconductors to image the laser beams deflected from the rotary polygon mirror on the photoconductors, respectively, and at least two flat plates inclined at a predetermined angle θ to a main scanning direction between the f-theta lenses and the photoconductors to correct inclinations of scanning lines, respectively.

The flat plate may be inclined at a predetermined angle 90°-θ$_\perp$ with reference to a scanning surface, and may be formed of a transparent material having a predetermined thickness t and a predetermined refractive index n.

According to another aspect of the present invention there is provided a laser scanning unit, including a light source, a rotary polygon mirror to deflect a laser beam emitted from the light source, and an f-theta lens to image the laser beam deflected from the rotary polygon mirror on a photoconductor. The f-theta lens may be disposed to produce a slope in a main scanning direction to correct an inclination of scanning line.

According to another aspect of the present invention there is provided an image forming apparatus, including a photoconductor, and the laser scanning unit as described above to form an electrostatic latent image on the photoconductor.

According to another aspect of the present invention there is provided a laser scanning unit capable of correcting a curvature of scanning line, including a plurality of light sources, a rotary polygon mirror to deflect laser beams inclined incident from the light sources, an f-theta lens to image the laser beams deflected from the rotary polygon mirror on a photoconductor, and a flat plate disposed between the rotary polygon mirror and the f-theta lens to correct the curvature of a scanning line.

The flat plate may be inclined at a predetermined angle θ' with reference to a scanning surface, and may be formed of a transparent material having a predetermined thickness t and a predetermined refractive index n.

The predetermined angle θ' of the flat plate may satisfy the following mathematic formula,

$$\left| 0.8 \cdot L \cdot \left( \frac{1}{\cos\theta_s} \right) \cdot \tan\theta' \right| \leq \left| \frac{t \cdot \cos\theta' \cdot \sin\theta'}{\sqrt{n^2 - \sin\theta'} \cdot \cos\left( \sin^{-1}\frac{\sin\theta_d}{n} \right)} \right| \leq \left| 1.2 \cdot L \cdot \left( \frac{1}{\cos\theta_s} - 1 \right) \cdot \tan\theta' \right|$$

wherein a distance from the rotary polygon mirror to the flat plate and a time required to scan a line on the photoconductor are represented as L and s, respectively.

According to another aspect of the present invention there is provided an image forming apparatus, including a photoconductor, a plurality of light sources, and the laser scanning unit as described above to form an electrostatic latent image on the photoconductor.

According to another aspect of the present invention there is provided a laser scanning unit including a light source to emit a laser beam, a photoconductor upon which the laser beam is incident to form an electrostatic latent image, and a flat plate disposed between the light source and the photoconductor at a predetermined angle to correct a distorted scanning line of the light source.

The laser scanning unit may further include a rotary polygon mirror to deflect the laser beam emitted from the light source, and an f-theta lens to image the laser beam deflected from the rotary polygon mirror on the photoconductor.

The flat plate may have a predetermined thickness t and a predetermined refractive index n to produce optical paths of the laser beam.

A difference in the optical paths may produce the distorted scanning line.

An angle of the flat plate with respect to a scanning surface may be adjusted to correct the distorted scanning line.

According to another aspect of the present invention there is provided a method of correcting a scanning line of a laser beam, the method including emitting the laser beam through a flat plate to be incident on a photoconductor, and adjusting an angle of the flat plate with respect to a scanning surface.

The angle of the flat plate may satisfy the following mathematic formula,

$$\left| 0.8 \cdot L \cdot \left( \frac{1}{\cos \theta_s} \right) \cdot \tan \theta' \right| \leq \left| \frac{t \cdot \cos \theta' \cdot \sin \theta'}{\sqrt{n^2 - \sin \theta'} \cdot \cos \left( \sin^{-1} \frac{\sin \theta_d}{n} \right)} \right| \leq \left| 1.2 \cdot L \cdot \left( \frac{1}{\cos \theta_s} - 1 \right) \cdot \tan \theta' \right|$$

wherein the angle of the flat plate with respect to the scanning surface, a magnitude of the image angle, a distance from the rotary polygon mirror to the flat plate, a predetermined refractive index of the flat plate, and a time required to scan a line on the photoconductor are represented as θ', $\theta_d$, L, n, and s, respectively.

The angle of the flat plate may satisfy the following formula,

$$0 < \left| n \cdot t \cdot \sin \theta_\perp \cdot \cos \theta_\perp \cdot \left( \frac{1}{\sin(\theta_1 + \theta) \cdot \sqrt{n^2 - \sin^2 \theta_\perp}} \right) - \left( \frac{1}{\sin(\theta_2 - \theta) \cdot \sqrt{n^2 - \sin^2 \theta_\perp}} \right) \right| < 3 \times Linear\ velocity\ of\ photoconductor \times s$$

wherein the angle of the flat plate with respect to the scanning surface, a predetermined angle with respect to a main scanning direction, a predetermined thickness of the flat plate, a predetermined refractive index of the flat plate, a first angle formed by a first portion of the laser beam corresponding to a beam axis, and a second angle formed by a second portion of a beam corresponding to the beam axis, are represented as 90°-$\theta_\perp$, θ, t, n, $\theta_1$, and $\theta_2$ respectively.

For a better understanding of the invention, and to show how embodiments of the same may be carried into effect, reference will now be made, by way of example, to the accompanying diagrammatic drawings in which:

FIG. 1 is a view schematically illustrating a conventional laser scanning unit with two light sources;

FIG. 2 is a view schematically illustrating another conventional laser scanning unit having means to correct an inclination of a scanning line;

FIG. 3 is a view schematically illustrating a laser scanning unit having a flat plate to correct an inclination of a scanning line according to an exemplary embodiment of the present general inventive concept;

FIG. 4 is a top plan view illustrating a method of calculating an arrangement angle of the flat plate of FIG. 3;

FIG. 5 is a side elevation view of the flat plate of FIG. 3;

FIG. 6 is a view schematically illustrating a laser scanning unit having a flat plate to correct a curvature of a scanning line according to another exemplary embodiment of the present general inventive concept;

FIG. 7 is a top plan view illustrating a method of calculating an arrangement angle of the flat plate of FIG. 6;

FIG. 8 is a view illustrating a state in which flat plates and f-theta lenses are disposed, so that a plurality of laser beams do not interfere with one another;

FIG. 9 is a side elevation view of the flat plate of FIG. 6; and

FIG. 10 is a view schematically illustrating an image forming apparatus to which the laser scanning unit according to the above exemplary embodiments of the present general inventive concept are applied.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

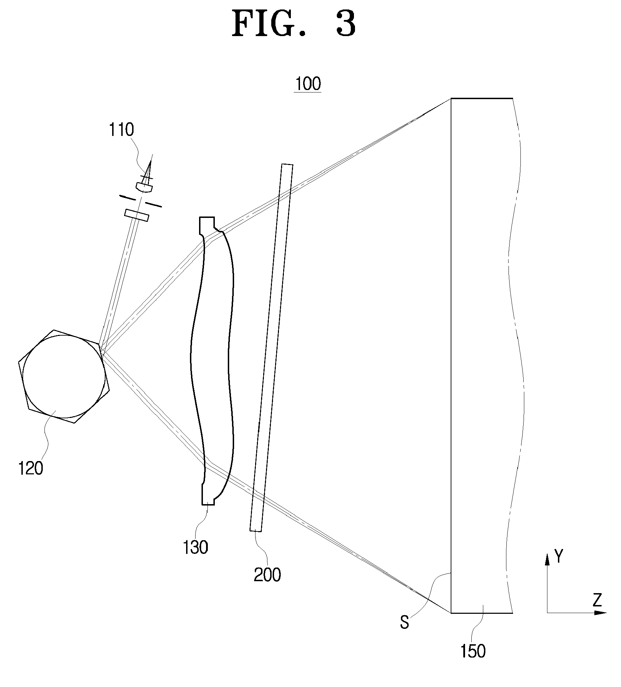

FIG. 3 is a view schematically illustrating a laser scanning unit 100 according to an exemplary embodiment of the present general inventive concept. The laser scanning unit 100 according to the exemplary embodiment of the present general inventive concept includes a light source 110, a rotary polygon mirror 120, an f-theta lens 130 and a flat plate 200.

Since constructions and functions of the light source 110, the rotary polygon mirror 120, and the f-theta lens 130 are conventional components of the present general inventive concept, detailed descriptions thereof will be omitted for clarity and conciseness.

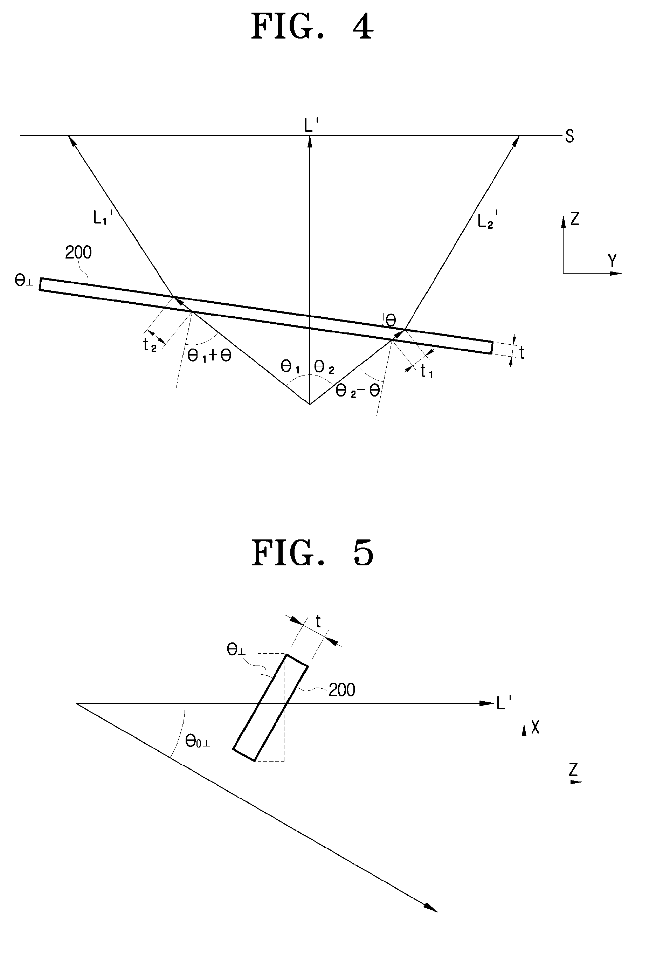

The flat plate 200 is disposed between the f-theta lens 130 and a photoconductor 150 to correct an inclination of a scanning line of a laser beam imaged on the photoconductor 150. As illustrated in FIG. 4, the flat plate 200 is diagonally disposed at a predetermined angle $\theta$ corresponding to a main scanning direction.

Hereinafter, a method of evaluating the predetermined angle $\theta$ of the flat plate 200 diagonally disposed as described above will be explained with reference to FIG. 4.

An image forming apparatus can be configured, so that according to a printing speed thereof, a rotating speed of the rotary polygon mirror 120 can be determined, and according to the rotating speed of the rotary polygon mirror 120, a linear velocity of the photoconductor 150 can be determined. Since the rotary polygon mirror 120 can rotate in a scanning direction and the photoconductor 150 can rotate in a vertical direction corresponding to the scanning direction, the laser beam imaged on a surface of the photoconductor 150 may generate an inclination of a scanning line. Such an inclination of the scanning line can be corrected by diagonally disposing the flat plate 200 at the predetermined angle $\theta$ to a light axis L' in the main scanning direction between the f-theta lens 130 and the photoconductor 150.

If the flat plate 200 is diagonally disposed as described above, the laser beam may generate a difference in an optical path according to the angle $\theta$ of the flat plate 200 while passing through the flat plate 200. The optical path can be calculated by multiplying a refractive index by a thickness of a medium to be passed therethrough. Accordingly, a refractive index n and a thickness t of the flat plate 200 produce an optical path of the laser beam passing through a center of the flat plate 200 and arrive at $n \cdot t$, and optical paths $L_{1'}$ and $L_{2'}$ of the laser beam passing through both ends of the flat plate 200 arrive at $n \cdot t_1$ and $n \cdot t_2$, respectively. Since the difference in the optical paths appears as an inclination of the scanning line on the surface of the photoconductor, the inclination of the scanning line can be corrected if the angle $\theta$ of the flat plate 200 is adjusted.

In addition, to prevent the laser beam imaged on the photoconductor from reflecting again and thus forming a ghost image on the surface of the photoconductor 150, as illustrated in FIG. 5, the flat plate 200 is disposed in a state inclined by a predetermined angle $(90° - \theta_\perp)$ with reference to a scanning surface S. An angle of the laser beam incident on the flat plate 200 is $\theta_{0\perp}$.

Accordingly, the angle $(\theta)$ of the flat plate 200 satisfies the following mathematic formula 1 where a time s is required to scan a line on the photoconductor.

[Mathematic formula 1]

$$0 < \left| n \cdot t \cdot \sin\theta_\perp \cdot \cos\theta_\perp \cdot \left( \frac{1}{\sin(\theta_1 + \theta) \cdot \sqrt{n^2 - \sin^2\theta_1}} \right) - \left( \frac{1}{\sin(\theta_2 - \theta) \cdot \sqrt{n^2 - \sin^2\theta_1}} \right) \right| < 3 \times Linear\ velocity\ of\ photoconductor \times s$$

The angle $(\theta)$ of the flat plate 200 can be calculated using the above mathematic formula 1. For instance, if a linear velocity of the photoconductor 150 is 70mm/s, the time s required to scan a line is 43$\mu$s, the incident angle $\theta_{0\perp}$ is 0°, a slope $\theta_\perp$ of the flat plate 200 is 10°, the thickness t of the flat plate 200 is 2mm, and $\theta_1$ and $\theta_2$ are 30°, respectively, and an inclination of a scanning line caused by the linear velocity of the photoconductor 150 and the rotation of the rotary polygon mirror 120 is generated by a magnitude of approximately 30$\mu$m.

Accordingly, when an angle $(\theta)$ of the flat plate 200, to correct the inclination of the scanning line caused by the linear velocity of the photoconductor 150 having the magnitude of approximately 30$\mu$m, is calculated using the above mathematic formula 1, it is determined to have a value of 0.6°. Thus, if the flat plate 200 has a tilt to 0.6°, the inclination of the scanning line is calculated as a value reduced by a magnitude of approximately 30$\mu$m as compared with the original state through the above mathematic formula 1, and is thus corrected.

The above is also applicable to a laser scanning unit which uses more than two light sources and a single rotary polygon mirror to image laser beams on more than two photoconductors, as described in the description of FIG. 2. With reference to FIG. 3, the flat plate 200 may also be diagonally disposed between the photoconductors 150 and f-theta lenses 130, which form optical paths, to correct inclinations of scanning lines. Since a construction and an arrangement of the flat plate 200 are the same as those of the laser scanning unit 100 as described above with reference to FIG. 2, a detailed description thereof will be omitted for clarity and conciseness.

Also, although not illustrated, it is possible that instead of diagonally disposing the flat plate 200 as a separate part between the f-theta lens 130 and the photoconductor 150, the f-theta lens 130 itself, or a collimator lens (not illustrated) or a cylinder lens (not illustrated) may be diagonally disposed to correct an inclination of the scanning line as in the flat plate 200 of the laser scanning unit as described above.

As described above, when any one of various parts through which the laser beam emitted from the light source 110 is diagonally disposed by the predetermined angle to the main scanning direction, the inclination of the scanning line of the laser beam imaged on the photoconductor 150 can be corrected.

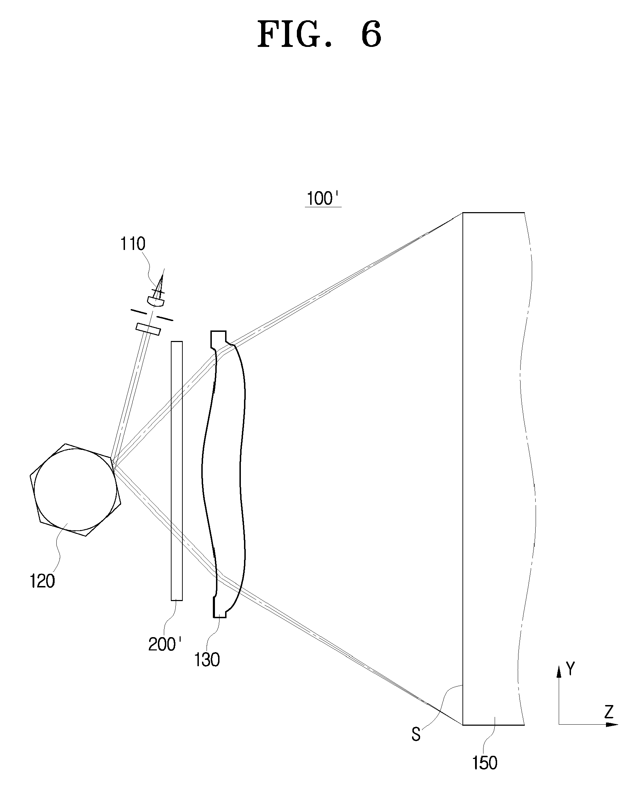

FIG. 6 is a view schematically illustrating a laser scanning unit 100' according to another exemplary embodiment of the present general inventive concept. The laser scanning unit 100' according to another exemplary embodiment of the present general inventive concept includes a light source 110, a rotary polygon mirror 120, an f-theta lens 130 and a flat plate 200'.

Since constructions and functions of the light source 110, the rotary polygon mirror 120, and the f-theta lens 130 are known components, detailed descriptions thereof will be omitted for clarity and conciseness.

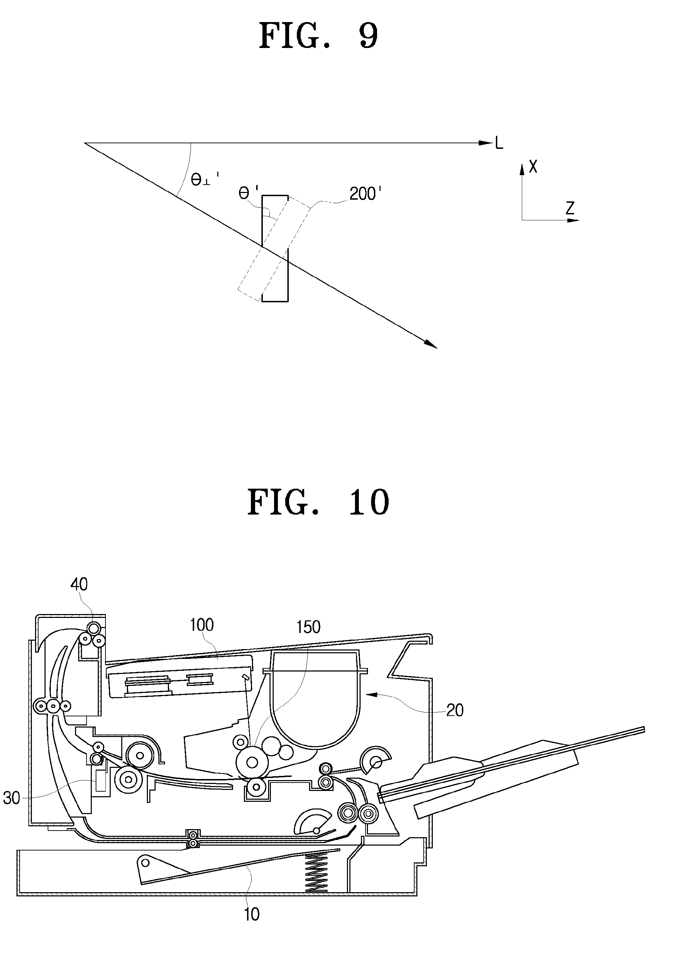

The flat plate 200' is disposed between the rotary polygon mirror 120 and the f-theta lens 130 to correct a curvature of a scanning line of a laser beam imaged on a photoconductor 150. As illustrated in FIG. 9, the flat plate 200 is inclined at a predetermined angle ($\theta$') with reference to a scanning direction.

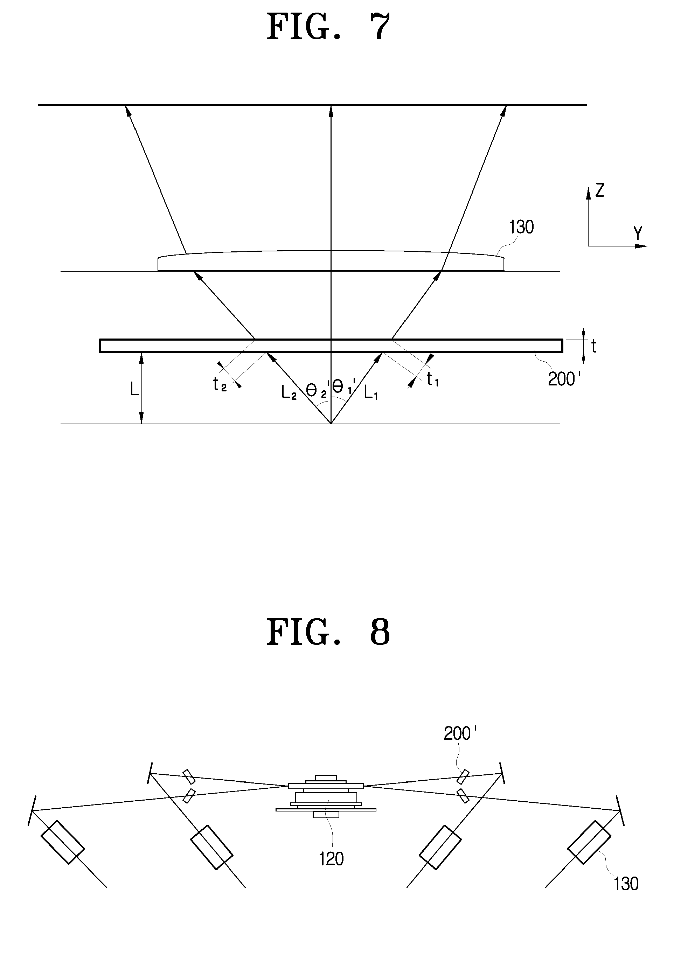

Hereinafter, a method of evaluating the predetermined angle ($\theta$') of the flat plate 200' inclined as described above will be explained with reference to FIGS. 7 through 9.

An image forming apparatus can be configured so that according to a printing speed thereof, a rotating speed of the rotary polygon mirror 120 can be determined, and according to the rotating speed of the rotary polygon mirror 120, a linear velocity of the photoconductor 150 can be determined. If a plurality of light sources are provided, as illustrated in FIG. 8, the image forming apparatus can be configured so that laser beams emitted from the respective light sources are incident and are reflected at predetermined angles onto and from the rotary polygon mirror 120, and then are incident onto a plurality of photoconductors (not illustrated) without interfering with one another.

When the angles of the laser beams are inclined incident onto the rotary polygon mirror 120, an image angle, and a distance from the rotary polygon mirror 120 to the flat plate 200' are represented as $\theta'\perp$ (see FIG. 9), $\theta_d$ (+ direction is $\theta'_1$ and - direction is $\theta'_2$ and L, respectively, a decenter is generated by an amount of $\left(\dfrac{L}{\cos\theta_d}\right)\cdot\tan\theta'_\perp$.

The decenter is a variation in focus as a center of an optical axis onto which the laser beam is incident is moved. If a magnitude of the image angle $\theta_d$ is changed, a moving distance of the laser beam is changed and thus a magnitude of the decenter is changed. As a result, an incident height of the laser beam at both sides of the flat plate is different from that of a center thereof. At this time, a difference in the incident height of the laser beam between the center and the both sides of the flat plate corresponds to a length of the curvature of the scanning line.

When the laser beam having the curvature of a scanning line as described above passes through the flat plate 200' while inclined at the predetermined angle, the curvature of the scanning line of the laser beam is corrected by a difference in the optical path generated due to the flat plate 200' inclined at the predetermined angle, and the laser beam becomes incident into an optical system including the f-theta lens 130. A rotated angle $\theta$' of an xz plane of the flat plate, a refractive index n, and a thickness t of the flat plate can produce the magnitude of the decenter by the following mathematic formula 2.

[Mathematic formula 2]

$$decenter = \frac{t\cdot\cos\theta'\cdot\sin\theta'}{\sqrt{n^2-\sin\theta'}\cdot\cos\left(\sin\dfrac{\sin\theta_d}{n}\right)}$$

Accordingly, if the length of the curvature of the scanning line generated by the laser beam inclined incident onto the rotary polygon mirror 120 is set to the same value and a direction contrary to the inclination of the flat plate 200', the curvature of the scanning line can be corrected.

When an image angle $\theta_c$ passing through the center of the flat plate 200' is very close to 0 and an image angle passing through the both sides of the flat plate 200' is $\theta_s$, an inclined amount, that is, the rotated or inclined angle $\theta$' and the thickness t of the flat plate 200 satisfy the following mathematic formula 3.

[Mathematic formula 3]

$$\left| 0.8 \cdot L \cdot \left( \frac{1}{\cos \theta_s} \right) \cdot \tan \theta' \right| \leq \left| \frac{t \cdot \cos \theta' \cdot \sin \theta'}{\sqrt{n^2 - \sin \theta'} \cdot \cos \left( \sin^{-1} \frac{\sin \theta_d}{n} \right)} \right| \leq \left| 1.2 \cdot L \cdot \left( \frac{1}{\cos \theta_s} - 1 \right) \cdot \tan \theta' \right|$$

The construction as described above may be applied to a tandem type laser scanning unit, which is used in the image forming apparatus described in the description of the related art, such as a color laser printer to form a color image by using different laser scanning units according to four colors, for example, cyan, magenta, yellow and black.

As illustrated in FIG. 10, an image forming apparatus to which the laser scanning unit constructed as described above is applied includes a medium supplying unit 10, a developing unit 20 having a photoconductor 150, a laser scanning unit 100 to form an electrostatic latent image on the photoconductor 150, a fixing unit 30, and a medium discharging unit 40.

Since the medium supplying unit 10, the developing unit 20, the fixing unit 30, and the medium discharging unit 40 are conventional components, detailed descriptions thereof will be omitted for clarity and conciseness.

The laser scanning unit 100 is provided with a flat plate 200 to correct an inclination of a scanning line of a laser beam imaged on the photoconductor 150 as described above.

Referring to FIG. 3, a magnitude of the inclination of the scanning line can be estimated using speeds of the rotary polygon mirror 120 and the photoconductor 150 determined according to a printing speed. Accordingly, if to offset the estimated magnitude of the inclination of scanning line, the flat plate 200 formed of a transparent material may be diagonally disposed in the predetermined angle θ calculated by the above mathematic formula 1 between the f-theta lens 130 and the photoconductor 150 to correct the inclination of scanning line.

Alternatively, the image forming apparatus of FIG. 10 may include the laser scanning unit 100' of FIG. 6 provided with the flat plate 200' to correct a curvature of the scanning line of a laser beam imaged on the photoconductor 150 as described above.

That is, a length of the curvature of the scanning line can be estimated by a slope of the laser beam incident onto the rotary polygon mirror 120. Accordingly, if the flat plate 200' formed of a transparent material is diagonally disposed in the predetermined angle θ' calculated by the above mathematic formula 3 between the rotary polygon mirror 120 and the f-theta lens 130 to generate an amount of the curvature of scanning line contrary to the estimated that, it is possible to correct the curvature of scanning line.

As apparent to the foregoing description, according to an exemplary embodiment of the present general inventive concept, the laser scanning unit and the image forming apparatus having the same can correct an inclination and/or a curvature of a scanning line caused by rotations of a rotary polygon mirror and a photoconductor and other working and assembling processes, in order to minimize performance deteriorations, such as a diameter change of a laser beam, a linearity deterioration of the laser beam, etc., thereby allowing product quality to improve.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A laser scanning unit, comprising:

   a light source (110);
   a rotary polygon mirror (120) to deflect a laser beam emitted from the light source (110);
   an f-theta lens (130) to image the laser beam deflected from the rotary polygon mirror (120) on a photoconductor (150); and
   a flat plate (200) disposed between the light source (110) and the photoconductor (150) to correct a scanning line of the light source (110).

2. The laser scanning unit according to claim 1, wherein the flat plate (200) is inclined at a predetermined angle θ to a main scanning direction between the f-theta lens (130) and the photoconductor (150) to correct an inclination of the scanning line.

3. The laser scanning unit according to claim 2, wherein the flat plate (200) is inclined at a predetermined angle 90°-$\theta_\perp$ with reference to a scanning surface.

4. The laser scanning unit according to claim 3, wherein the flat plate (200) is formed of a transparent material having a predetermined thickness t and a predetermined refractive index n.

5. The laser scanning unit according to claim 4, wherein the predetermined angle θ of the flat plate (200) satisfies the following mathematic formula:

$$0 < \left| n \cdot t \cdot \sin\theta_\perp \cdot \cos\theta_\perp \cdot \left( \frac{1}{\sin(\theta_1 + \theta) \cdot \sqrt{n^2 - \sin^2\theta_\perp}} \right) - \left( \frac{1}{\sin(\theta_2 - \theta) \cdot \sqrt{n^2 - \sin^2\theta_\perp}} \right) \right| < 3 \times Linear\ velocity\ of\ photoconductor \times s$$

   wherein a time required to scan a line on the photoconductor (150), a first angle formed by a first portion of the laser beam corresponding to a beam axis, and a second angle formed by a second portion of the laser beam corresponding to the beam axis, are represented as s, $\theta_1$, and $\theta_2$, respectively.

6. The laser scanning unit according to any preceding claim, wherein the flat plate (200) is disposed between the rotary polygon mirror (120) and the f-theta lens (130) to correct a curvature of the scanning line.

7. The laser scanning unit according to claim 6, wherein the flat plate (200) is inclined at a predetermined angle θ' with reference to a scanning surface.

8. The laser scanning unit according to claim 7, wherein the flat plate (200) is formed of a transparent material having a predetermined thickness t and a predetermined refractive index n.

9. The laser scanning unit according to claim 7, wherein the predetermined angle θ' of the flat plate (200) satisfies the following mathematic formula:

$$\left| 0.8 \cdot L \cdot \left( \frac{1}{\cos\theta_s} \right) \cdot \tan\theta' \right| \leq \left| \frac{t \cdot \cos\theta' \cdot \sin\theta'}{\sqrt{n^2 - \sin\theta'} \cdot \cos\left( \sin^{-1} \frac{\sin\theta_d}{n} \right)} \right| \leq \left| 1.2 \cdot L \cdot \left( \frac{1}{\cos\theta_s} - 1 \right) \cdot \tan\theta' \right|$$

   wherein a magnitude of the image angle, a distance from the rotary polygon mirror (120) to the flat plate (200), and a time required to scan a line on the photoconductor (150) are represented as $\theta_d$, L, and s, respectively.

10. A laser scanning unit, comprising:

at least two light sources (110);
a rotary polygon mirror (120) to deflect laser beams emitted from the light sources (110) toward at least two photoconductors (150), respectively;
at least two f-theta lenses (130) disposed between the light sources (110) and the photoconductors (150) to image the laser beams deflected from the rotary polygon mirror (120) on the photoconductors (150), respectively; and
at least two flat plates (200) inclined disposed in a predetermined angle θ with reference to a main scanning direction between the f-theta lenses (130) and the photoconductors (150) to correct inclinations of scanning lines, respectively.

11. The laser scanning unit according to claim 10, wherein the flat plate (200) is inclined at a predetermined angle 90°-$\theta_\perp$ with reference to a scanning surface.

12. The laser scanning unit according to claim 11, wherein the flat plate (200) is formed of a transparent material having a predetermined thickness t and a predetermined refractive index n.

13. The laser scanning unit according to claim 12, wherein the predetermined angle θ of the respective flat plates (200) satisfies the following mathematic formula:

$$0 < \left| n \cdot t \cdot \sin\theta_\perp \cdot \cos\theta_\perp \cdot \left( \frac{1}{\sin(\theta_1 + \theta) \cdot \sqrt{n^2 - \sin^2\theta_\perp}} \right) - \left( \frac{1}{\sin(\theta_2 - \theta) \cdot \sqrt{n^2 - \sin^2\theta_\perp}} \right) \right| < 3 \times \textit{Linear velocity of photoconductor} \times s$$

wherein a time required to scan a line on the respective photoconductors (150), a first angle formed by a first portion of the laser beam corresponding to a beam axis, and a second angle formed by a second portion of the laser beam corresponding to the beam axis, are represented as s, $\theta_1$, and $\theta_2$, respectively.

14. A laser scanning unit, comprising:

a light source (110);
a rotary polygon mirror (120) to deflect a laser beam emitted from the light source (110); and
an f-theta lens (130) to image the laser beam deflected from the rotary polygon mirror (120) on a photoconductor (150),

wherein the f-theta lens (130) is disposed to produce a slope in a main scanning direction to correct an inclination of scanning line.

15. An image forming apparatus, comprising:

a photoconductor (150);
a light source (110);
a rotary polygon mirror (120) to deflect a laser beam emitted from the light source (110);
an f-theta lens (130) to image the laser beam deflected from the rotary polygon mirror (120) on the photoconductor (150); and
a flat plate (200) inclined at a predetermined angle θ with reference to a main scanning direction between the f-theta lens (130) and the photoconductor (150) to correct an inclination of a scanning line.

16. The image forming apparatus according to claim 15, wherein the flat plate (200) is disposed at a predetermined angle 90°- $\theta_\perp$ with reference to a scanning surface.

17. The image forming apparatus according to claim 16, wherein the flat plate (200) is formed of a transparent material having a predetermined thickness t and a predetermined refractive index n.

18. The image forming apparatus according to claim 17, wherein the predetermined angle θ of the flat plate (200) satisfies the following mathematic formula:

$$0 < \left| n \cdot t \cdot \sin\theta_1 \cdot \cos\theta_1 \cdot \left( \frac{1}{\sin(\theta_1 + \theta) \cdot \sqrt{n^2 - \sin^2\theta_-}} \right) - \left( \frac{1}{\sin(\theta_2 - \theta) \cdot \sqrt{n^2 - \sin^2\theta_\perp}} \right) \right| < 3 \times Linear\ velocity\ of\ photoconductor \times s$$

wherein a time required to scan a line on the photoconductor (150), a first angle formed by a first portion of the laser beam corresponding to a beam axis, and a second angle formed by a second portion of the laser beam corresponding to the beam axis, are represented as s, $\theta_1$, and $\theta_2$, respectively.

19. An image forming apparatus, comprising:

   a photoconductor (150);
   a plurality of light sources (110);
   a rotary polygon mirror (120) to deflect laser beams inclined incident from the light sources (110);
   an f-theta lens (130) to image the laser beams deflected from the rotary polygon mirror (120) on the photoconductor (150); and
   a flat plate (200) disposed between the rotary polygon mirror (120) and the f-theta lens (130) to correct a curvature of a scanning line.

20. The image forming apparatus according to claim 19, wherein the flat plate (200) is inclined at a predetermined angle θ' with reference to a scanning surface.

21. The image forming apparatus according to claim 20, wherein the flat plate (200) is formed of a transparent material having a predetermined thickness t and a predetermined refractive index n.

22. The image forming apparatus according to claim 21, wherein the predetermined angle θ' of the flat plate (200) satisfies the following mathematic formula:

$$\left| 0.8 \cdot L \cdot \left( \frac{1}{\cos\theta_s} \right) \cdot \tan\theta' \right| \le \left| \frac{t \cdot \cos\theta' \cdot \sin\theta'}{\sqrt{n^2 - \sin\theta'} \cdot \cos\left( \sin^{-1}\frac{\sin\theta_d}{n} \right)} \right| \le \left| 1.2 \cdot L \cdot \left( \frac{1}{\cos\theta_s} - 1 \right) \cdot \tan\theta' \right|$$

wherein a magnitude of the image angle, a distance from the rotary polygon mirror (120) to the flat plate (200), and a time required to scan a line on the photoconductor (150) are represented as $\theta_d$, L, and s, respectively.

23. A laser scanning unit, comprising:

   a light source (110) to emit a laser beam;
   a photoconductor (150) upon which the laser beam is incident to form an electrostatic latent image; and
   a flat plate (200) disposed between the light source (110) and the photoconductor (150) at a predetermined angle to correct a distorted scanning line of the light source (110).

24. The laser scanning unit of claim 23, further comprising:

   a rotary polygon mirror (120) to deflect the laser beam emitted from the light source (110); and
   an f-theta lens (130) to image the laser beam deflected from the rotary polygon mirror (120) on the photoconductor (150).

25. The laser scanning unit of claim 23, wherein the flat plate (200) has a predetermined thickness t and a predetermined refractive index n to produce optical paths of the laser beam.

26. The laser scanning unit of claim 25, wherein a difference in the optical paths produces the distorted scanning line.

**27.** The laser scanning unit of claim 26, wherein an angle of the flat plate (200) with respect to a scanning surface is adjusted to correct the distorted scanning line.

**28.** A method of correcting a scanning line of a laser beam, the method comprising:

emitting the laser beam through a flat plate (200) to be incident on a photoconductor (150); and
adjusting an angle of the flat plate (200) with respect to a scanning surface.

**29.** The method of claim 28, wherein the angle of the flat plate (200) satisfies the following mathematic formula:

$$\left| 0.8 \cdot L \cdot \left( \frac{1}{\cos \theta_s} \right) \cdot \tan \theta' \right| \leq \left| \frac{t \cdot \cos \theta' \cdot \sin \theta'}{\sqrt{n^2 - \sin \theta'} \cdot \cos \left( \sin^{-1} \frac{\sin \theta_d}{n} \right)} \right| \leq \left| 1.2 \cdot L \cdot \left( \frac{1}{\cos \theta_s} - 1 \right) \cdot \tan \theta' \right|$$

wherein the angle of the flat plate (200) with respect to the scanning surface, a magnitude of the image angle, a distance from the rotary polygon mirror (120) to the flat plate (200), a predetermined refractive index of the flat plate (200), and a time required to scan a line on the photoconductor (150) are represented as θ', $\theta_d$, L, n, and s, respectively.

**30.** The method of claim 30, wherein the angle of the flat plate (200) satisfies the following mathematic formula:

$$0 < \left| n \cdot t \cdot \sin \theta_\perp \cdot \cos \theta_\perp \cdot \left( \frac{1}{\sin(\theta_1 + \theta) \cdot \sqrt{n^2 - \sin^2 \theta_\perp}} \right) - \left( \frac{1}{\sin(\theta_2 - \theta) \cdot \sqrt{n^2 - \sin^2 \theta_\perp}} \right) \right| < 3 \times Linear\ velocity\ of\ photoconductor \times s$$

wherein the angle of the flat plate (200) with respect to the scanning surface, a predetermined angle with respect to a main scanning direction, a predetermined thickness of the flat plate (200), a predetermined refractive index of the flat plate (200), a first angle formed by a first portion of the laser beam corresponding to a beam axis, and a second angle formed by a second portion of a beam corresponding to the beam axis, are represented as 90°- $\theta_\perp$, θ, t, n, $\theta_1$, and $\theta_2$ respectively.

# FIG. 1

# FIG. 2

# FIG. 3

# FIG. 4

# FIG. 5

# FIG. 6

# FIG. 7

# FIG. 8

# FIG. 9

# FIG. 10

**European Patent Office**

**EUROPEAN SEARCH REPORT**

Application Number

EP 07 11 1077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 5 903 379 A (KAMIKUBO JUNJI [JP])<br>11 May 1999 (1999-05-11)<br>* the whole document * | 1,6-8,<br>15,23-27<br>19-21 | INV.<br>G02B26/12 |
| X | US 2001/055139 A1 (HAYASHI YOSHINORI [JP])<br>27 December 2001 (2001-12-27)<br>* paragraphs [0026], [0027], [0059];<br>figures 1a-c * | 1,6-8 | |
| X<br>Y | JP 11 133338 A (CANON KK)<br>21 May 1999 (1999-05-21)<br>* the whole document * | 1-4,<br>15-17<br>10-12 | |
| X | JP 09 159944 A (RICOH KK)<br>20 June 1997 (1997-06-20)<br>* the whole document * | 1,6-8 | |
| X | JP 02 208623 A (RICOH KK)<br>20 August 1990 (1990-08-20)<br>* the whole document * | 1,6-8 | |
| Y | EP 0 388 981 A (CANON KK [JP])<br>26 September 1990 (1990-09-26)<br>* page 1, line 35 - line 51; figures 1,2a-b,4,8a *<br>* page 4, line 1 - page 5, line 5 *<br>* page 12, line 48 - page 13, line 22 * | 10-12,<br>19-21 | **TECHNICAL FIELDS SEARCHED (IPC)**<br><br>G02B |
| X | EP 1 621 917 A (FUJI PHOTO FILM CO LTD [JP]) 1 February 2006 (2006-02-01)<br>* paragraph [0014] - paragraph [0028];<br>figures 1,2,4 * | 14 | |

The present search report has been drawn up for all claims

| Place of search | Date of completion of the search | Examiner |
|---|---|---|
| Berlin | 9 January 2008 | Andreassen, Jon |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 11 1077

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2008

| Patent document cited in search report | | Publication date | Patent family member(s) | | Publication date |
|---|---|---|---|---|---|
| US 5903379 | A | 11-05-1999 | JP | 3486293 B2 | 13-01-2004 |
| | | | JP | 9274134 A | 21-10-1997 |
| US 2001055139 | A1 | 27-12-2001 | JP | 3939896 B2 | 04-07-2007 |
| | | | JP | 2001290095 A | 19-10-2001 |
| JP 11133338 | A | 21-05-1999 | NONE | | |
| JP 9159944 | A | 20-06-1997 | JP | 3461993 B2 | 27-10-2003 |
| JP 2208623 | A | 20-08-1990 | JP | 2750597 B2 | 13-05-1998 |
| EP 0388981 | A | 26-09-1990 | DE | 69015396 D1 | 09-02-1995 |
| | | | DE | 69015396 T2 | 24-05-1995 |
| | | | US | 5251055 A | 05-10-1993 |
| EP 1621917 | A | 01-02-2006 | JP | 2006039399 A | 09-02-2006 |
| | | | US | 2006023283 A1 | 02-02-2006 |

EPO FORM P0459

For more details about this annex : see Official Journal of the European Patent Office, No. 12/82

**EP 1 898 248 A1**

## REFERENCES CITED IN THE DESCRIPTION

### Patent documents cited in the description

- JP 2005265904 A
- JP 2004070108 A